# EUROPEAN PATENT SPECIFICATION

(11) **EP 0 873 774 B1**
(45) Date of publication and mention of the grant of the patent: **09.10.2002**
(21) Application number: 96940154.6
(22) Date of filing: 29.11.1996
(51) Int. Cl.: B01D 35/06

(54) **OIL FILTER NOT USING FILTER PAPER BUT USING PERMANENT MAGNETS**
ÖLFILTER MIT EINEM DAUERMAGNETEN ANSTELLE EINES FILTERPAPIERS
FILTRE A HUILE COMPORTANT DES AIMANTS PERMANENTS A LA PLACE DU PAPIER FILTRE

(30) Priority: 06.12.1995 JP 34431495
(43) Date of publication of application: 28.10.1998
(73) Proprietor: Tagen Tecs Co., Ltd., Tokyo 157 (JP)
(72) Inventor: NAKAMURA, Koji, Setagaya-ku, Tokyo 157 (JP)
(74) Representative: Serwe, Karl-Heinz, Dipl.-Ing.
(86) International application number: JP9603506
(87) International publication number: WO97020613

(56) References cited:
- EP-A- 0 268 475
- WO-A-97/01702
- JP-A- 6 009 984
- JP-A- 6 058 122
- JP-B- 2 007 682
- JP-B- 2 036 300
- JP-B- 3 014 488
- US-A- 3 900 400
- US-A- 4 663 034
- US-A- 4 705 626
- US-A- 5 228 990

## Description

### TECHNICAL FIELD

This invention pertains to oil filters that use permanent magnets, instead of (or as an adjunct to) paper filters, to remove micro particles (between 40 micro millimeter and about 1 micro millimeter) that cannot be removed by conventional paper filter, as well as to prevent the degradation process of oil with the magnetic ray. This will extend the life of instruments, improve fuel efficiency, reduce air pollution, and reduce waste products from disposing the filter cartridges by replacing the conventional oil filters and strainers, which use paper filter, that are installed on automobiles, motor cycles, trains, boats, airplanes, industrial vehicles and machinery, etc.

### BACKGROUND TO THE INVENTION

Contemporary or traditional oil filters are available in two types: element-exchangeable, full-flow filters and spin-on oil filters. The element exchangeable, full-flow filter does not have a relief valve but the filter paper is replaceable. With spin-on filters, a relief valve element and casing are formed together, and the paper filter is integral to the device. Both types use paper as the primary filter element.

The present invention makes a distinction between oil filters that use a paper filtering element and those, such as the invention, that use permanent magnets (positioned like pole to like pole, with intermingling magnetic fields) as the agent for removing microscopic metallic particles from lubricating fluid. Contemporary or traditional oil filters utilize temporary, paper filtering elements that cannot remove particles smaller than approximately 40 micro millimeters. The present invention represents an improvement in the art through its ability to remove from lubricating oil the smallest measurable metallic particles.

Approximately 50 million new cars are manufactured around the world each year with an average operating span of 9.3 years in Japan, 11 years in the United States and 12 years in Germany. If an average ten-year automobile operating span is assumed, roughly 500 million automobiles are in use simultaneously around the globe. With this figure, and the additional assumption that oil filters (or their paper elements) are replaced once a year, the number of oil filters with paper elements used annually, exceeds 500 million. Add the fact that new cars come with paper filters installed, and the annual use of paper oil filter elements reaches nearly 600 million units. The average amount of paper used in one filter cartridge is approximately 23.5 grams. 80,000 tons of wood is required to produce 600 million, 23.5 gram paper filter elements. Additionally, 40 to 60 thousand tons of wood (or 40 to 60 thousand trees) is necessary every year to produce paper packaging for these oil filters. If we take into consideration motorcycles, industrial vehicles, hydraulic machinery, air compressor, etc., an estimated 200 thousand tons of wood (or 200 thousand trees) consumed each year just for the production and packaging of oil filters. Furthermore, the kind of long fiber used in filter paper is harvested primarily from coniferous trees, which grow comparatively slowly. Consequently, extending the life of lubricating oils and machinery, reducing fuel consumption and the emission of polluting gases, and decreasing the volume of waste from disposable, paper oil filters, are each significant elements in any environmental protection strategy. There is a need for a new kind of oil filter that will be a solution to these problems.

It is reported above that permanent magnets can be used to remove microscopic metallic particles from the lubricating oil of internal combustion engines such as those used in trucks, automobiles, motorcycles, and trains, etc. But there are two different approaches to appropriating permanent magnets for this purpose. One approach is to place multiple magnets such that their North and South poles face each other and let oil flow between them.

Another approach is to position multiple magnets such that each magnet's North pole faces another magnet's North pole, and each magnet's South pole faces another magnet's South pole while oil flows between these opposing magnetic fields. Regarding this method, the inventor in question has submitted patent applications -- "lubricant anti-deterioration device using magnets (publication#6-9984)" and "removal of magnetic metal particles in a liquid and anti-scaling with removal device (publication#2-36300)" -- for the efficacious placement of repelling permanent magnets. Any of these devices are to be used together with oil filters that utilize paper elements and which purpose is to attract magnetic metal particles in motor oil, and to delay oil degradation by the imposition of magnetic fields. By combining the opposing magnet device and oil filters with paper elements, maximum oil cleaning and maintenance will be achieved.

The new invention improves the state of the art by replacing oil filters that utilize paper filtering elements with filters that use magnets placed in repelling positions to remove metallic particles from engine oil.

The purpose of this invention is to remove microscopic metal particles from engine oil, to stabilize oil chemistry by preventing heat induced bond breakage, to maintain oil viscosity and prevent oil degradation. All this keeps oil in optimal condition for a longer time, which in turn keeps internal combustion engines, transmissions, decelerators and hydraulic machinery in optimal condition which leads to improved fuel economy, cleaner exhaust and longer engine life. The repelling magnet oil filter lasts the life of the vehicle and simply needs to be cleaned every 30,000 or 40,000 miles. Collateral benefits of the invention includes the annual saving of hundreds of thousands of tons of timber ordinarily used in the manufacture of paper filters, the reduction of the waste disposal requirements associated with used paper filters or filter elements and the reduction of air pollution caused by toxic exhaust emissions.

The device under the US-Patent 5 228 990 A is a magnetic filter which is fixed to a cartridge type oil filter using a dispensable oil filter paper. The device substitutes only for a cartridge type oil filter. It does not substitute for a center bolt type element which needs filter paper to be exchanged nor with a inner type element which is fixed to is case by the element case's lid while the element case is fixed to an engine block. In this device, the distance between vertically adjacent permanent magnets is not decided.

The device under the US-Patent 4 705 626 A is connected to a pipe line of machinery and used with a cartridge type oil filter, a center bolt type element which needs filter paper to be exchanged, or a inner type element which is fixed to is case by the element case's lid while the element case is fixed to an engine block. The device cannot be a substitute for those oil filters but is used with them. The device consists of a tubular sleeve and annular permanent magnets. The device uses a tubular sleeve which is to be exchanged periodically. In this device, the distance between vertically adjacent permanent magnets is not decided.

The device under the US-Parent 4 663 034 A is connected to a pipe line of machinery and used with a cartridge type oil filter, a center bolt type element which needs filter paper to be exchanged, or a inner type element which is fixed to its case by the element case's lid while the element case is fixed to an engine block. The device cannot be a substitute for those oil filters but is used with them. In this device, the distance between vertically adjacent permanent magnets is not decided.

The device under the WO-Patent 9 701 702 A is used for conditioning a fuel to be fired. The device does not have structures to substitute for a cartridge type oil filter, a center bolt type element which needs a filter paper to be exchanged nor with a inner type element which is fixed to is case by the element case's lid while the element case is fixed to an engine block. The placement of permanent magnets in this device is different from the magnetic oil filter. Vertically adjacent magnets in the device is placed in such a way so that vertically adjacent magnets facing each other have opposite poles, that is S poles to N poles.

The device under the EP-Patent 0 268 475 A is connected to a pipe line of machinery and used for conditioning a fuel such as gas and diesel. The device does not have structures to substitute for a cartridge type oil filter, a center bolt type element which needs filter paper to be exchanged nor with a inner type element which is fixed to is case by the element case's lid while the element case is fixed to an engine block. In this device, the distance between vertically adjacent permanent magnets is not decided.

This device under the US-Patent 3 900 400 A is connected to a pipe line of machinery and used for conditioning a fuel or engine oil. The device does not have structures to substitute for a cartridge type oil filter, a center bolt type element which needs filter paper typ be exchanged nor with a inner type element which is fixed to is case by the element case's lid while the element case is fixed to an engine block. This device contains a part using filter paper which needs to be exchanged periodically. In this device, the distance between vertically adjacent permanent magnets is not decided.

The device under JP-A-40609984 has a number of ring-form permanent magnets, each provided with a yoke on both ends are put into a cylindrical turbulence plate, wherein the space between magnets repelling each other is narrowed to density the lines of magnetic force and a lubricating oil is allowed to flow through a turbulence plate provided in the interspace. In this device, the distance between adjacent permanent magnets is not decided.

In the device under JP-A- 581 43 891 (JP-2-036300 B2) are arranged a plurality of stick-shaped magnets having polygonal on the same circumference in a cylindrical casing in a manner such that the S and N poles of each magnet are directed to the inside and the outside, respectively (the S and N poles may be reversely directed). In this device, the distance between vertically adjacent permanent magnets is not decided.

### SUMMARY OF THE INVENTION

The first particular of this invention is to replace paper elements of oil filters with disk shape magnets. The multiple number of magnet sides are yoke processed. The magnets are positioned the same distance from each other with magnetic fields opposed -- North pole to North pole, and South pole to South pole. The distance between magnets should be at most one half of the distance the same magnets keep apart from each other when placed vertically stacked with repelling sides facing against each other (the lower magnet must be placed on a non-magnetic material). Placed between the magnets are position supporters composed of non-magnetic material drilled with holes to let oil flow through. This array of multiple permanent magnets stacked equidistant in polar opposition by a non-magnetic, porous framework around a central tube. It is an oil filter that uses permanent magnets in place of paper filters for the purpose of preventing wearing at lubricated areas by attracting magnetic micro particles in lubricant and preventing oil degradation by the use of magnetic field.

The second part of this invention is to replace paper elements of oil filter with rectangular cubic permanent magnet rods which has poles sideways. The multiple magnet rods are placed on a circle with only South or North poles facing toward the center of the circle; the other pole facing away from the circle. The magnets are positioned equidistant from a central point and the distance between magnets should be no more than the distance the magnets keep apart from each other when one is placed above the other with repelling poles facing against each other. (this time, the lower magnet must be placed on a non-magnetic material). Placed inside of the magnet ring is a plate interspersed with holes to create turbulence in oil flow. The lengthwise ends of the ring of magnets are placement framework to keep the magnets in place. This combination of multiple permanent magnets forms a filtering element maintained in a non-magnetic element case. It is an oil filter that uses permanent magnets in place of paper filter for the purpose of preventing wearing at lubricated areas by attracting magnetic micro particles in lubricant and preventing oil degradation by the use of magnetic field.

The example uses for this new oil filter are (1) an oil filter integrally consisting of the non-magnetic oil element case and the filter element made up with multiple number of disk and/or rod shaped permanent magnets (both to be called magnet filter element from here), such as the magnet filter element encased in a non-magnetic oil element case where the magnet element is fixed by a spring, (2) Oil filters consisting of a magnet filter element and a non-magnetic oil element case that is not fixed on the such devices as internal combustion system, transmission, decelerator, hydraulic machinery, from which magnet filter elements are removable. (3) Oil filters consisting of a magnetic filter element and a non-magnetic oil element case that is removably fixed onto such devices as internal combustion engines, transmissions, decelerators and hydraulic machinery.

This invention which uses magnet filter element in place of paper filter elements in the oil filter, by placing each magnets close together with opposing poles facing each other to let oil flow through them in order to remove metal particles and to prevent degradation of oil by the use of magnetic field. By using a large magnets utilizing the space that would be occupied by a paper filter, the objectives of this invention are attained by ensuring attraction of the magnetic micro particles and by extending the time for the oil to flow through the magnetic field.

This invention is, along with the above mentioned two particulars, to replace paper elements in the oil filter with repelling large magnets (N to N, S to S) utilizing the space that would be occupied by paper filter. This is to ensure removal of magnetic micro particles in the oil with large areas of attraction and to extend the time between cleaning of the parts. And, by placing the magnets and the repelling magnetic fields closer together, it has wider effective area, hence, extending the time in which the oil goes through the magnetic field.

Conventional oil filters that utilize paper elements cannot isolate metal particles smaller than 30 to 40 micrometers in diameter. This freely circulating metallic powder significantly accelerates the degradation of oil, because about 800 degrees Celsius is created at the origin of an iron particle. This excessive heat causes the chains of oil molecules to crack and produce carbon, which darkens the oil -- the visual evidence of its degradation. The presence of friction inducing particles, and the failure of degraded oil to protect the engine's interior surfaces from that friction, soon results in higher engine temperature, further oil degradation and the secondary and tertiary wear of engine parts.

As this invention, through a particular placement of permanent magnets (North pole to North pole. South pole to South pole), stabilizes the oil molecules and prevents carbon extraction by heat and shortening of oil molecule chains, the benefits of fine metal particle removal are amplified. Also use of large magnets is possible which produces better results by extending the oil's exposure to magnetic influence.

Additionally, an indirect, preventive benefit of the invention (and its reduction of the magnetic particles mixed with the oil) is improved sealing between cylinder and piston walls which minimizes the blow-by gas commonly associated with a loss of compression.

The invention is applicable to any device that uses a reservoir of oil to lubricate its moving parts, such as internal combustion system, transmission, decelerator, hydraulic machinery, etc. on water or wind powered plants, refrigerators, steam turbines, automobiles, motorcycles, rail transporters, airplanes, boats, load movers, such as forklifts, power tools and industrial machinery.

### DESCRIPTION OF THE DRAWINGS

FIG. **1** describes one of the usage examples with the newly invented paperless oil filter utilizing magnet filter element as a spin-on oil filter for automobiles.
FIG. **2** describes another usage example with the newly invented paperless oil filter utilizing magnet filter element as a spin-on oil filter for automobiles.
FIG. **3** describes one of the usage examples with the newly invented paperless oil filter utilizing magnet filter element as a full-flow element exchangeable oil filter for automobiles.
FIG. **4** describes another usage example with the newly invented paperless oil filter utilizing magnet filter element as a full-flow element exchangeable oil filter for automobiles.
FIG. **5** describes one of the usage examples with the newly invented paperless oil filter utilizing magnet as a filter insert.
FIG. **6** describes another usage example with the newly invented paperless oil filter utilizing magnet as a filter insert.

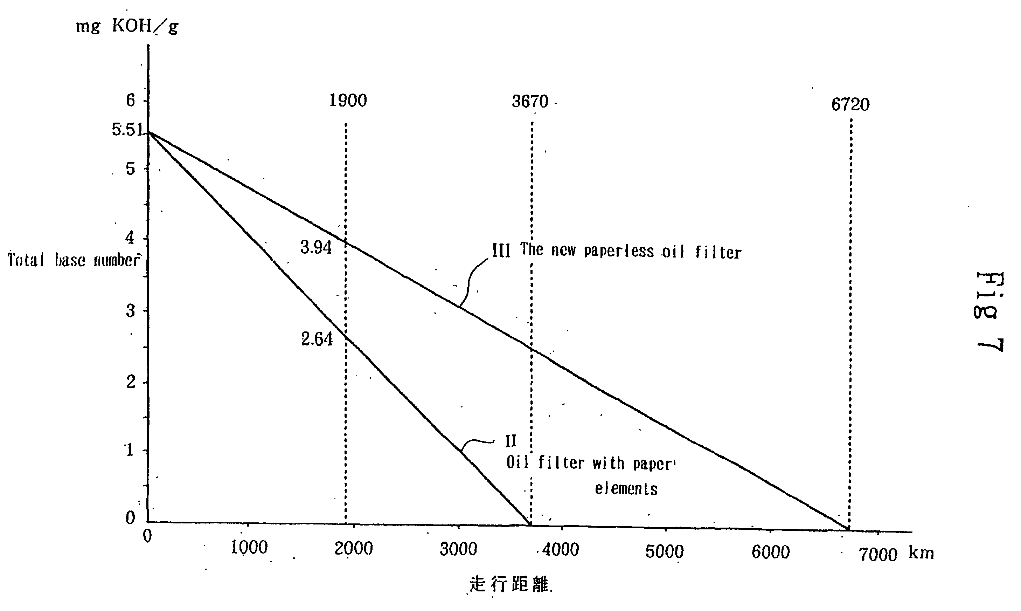

FIG. **7** is a graphic representation of decline in hydroxyl equivalent (mg KOH/g) measured on vehicle 1.

### DESCRIPTION OF THE PREFERRED EMBODIMENT(S)

The newly invented paperless oil filter utilizing permanent magnets consists of multiple disc or rectangular cube-shaped permanent magnets positioned propinquitously in repelling position (N to N, S to S) around a point. When oil flows among the magnets and through induced turbulence, the magnetic particles are attracted, and the oil is treated by the magnetic field to prevent degradation. The use of larger magnets utilizing the space that would ordinarily be occupied by a paper filter element, the objectives of this invention is attained by ensuring the removal of the magnetic micro particles and by extending the time the oil spends in the magnetic field.
Referring now to the drawings, in which like numerals refer to like elements throughout:

### Embodiment No. 1

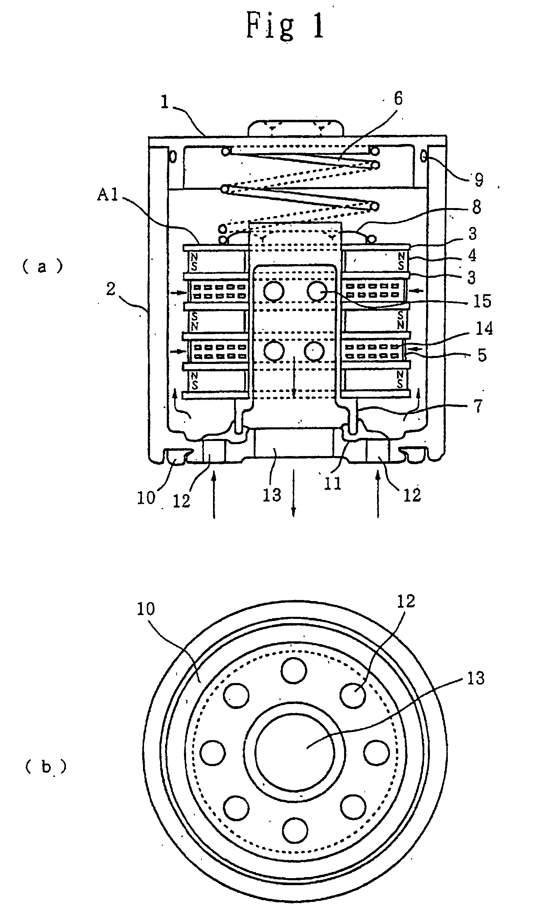

FIG. **1** indicates the application of the oil filter not using a filter paper but using permanent magnets as a spin-on oil filter for automobiles. (a) in FIG. **1** is a cross-sectional view and (b) is the base view of the filter.

FIG. **1** describes a sample oil filter in which the non-magnetic oil element casing and the disk-shaped, magnetic filter elements are integral to each other. The filter elements are constructed as described in the same diagram, and referred to as disk-shaped magnet element **A1**. The center-holed, disk-shaped permanent magnets **4** have flat, polar sides attached to yokes **3.** The element set bolt **7** is placed through the center holes of said magnets. Opposing, like magnetic poles are positioned so that their magnetic fields repel each other continually. Between the adjacent, disc-shaped magnets reside supportive structures **5** permeated by holes **14** through which oil flows. A nut **8** on the top end, and a rubber flow controller **11** is positioned on the bottom end of the element set bolt **7.** The disk-shaped magnetic element replacement for a paper filter is designated **A1**.

To make removal of the disk-shaped magnetic element **A1** feasible, the outer part has a two-part structure. The disk-shaped magnetic element **A1** which resides within the non-magnetic element case **2** is held in place by a set spring **6** above the disk-shaped magnetic element **A1** and the oil element cap **1** with O-ring **9** to secure the oil element case **2**.

As the arrows indicate, oil enters into the oil filter through the oil intake **12,** through holes **14** in the support plate **5**, between poles of the disc-shaped magnets **4**, and the element set bolt **7** and oil route **15**, and exits through the outlet **13** and returns to lubricate the host machinery. Embodiment No. 1 is attached to host machinery with case O-ring **10**.

By flowing the oil through magnetic fields generated by large permanent magnets, in which N poles and N poles, and S poles and S poles are repelling each other, rather than through conventional, paper-based oil filtering elements, a significantly larger percentage of metal particles are removed from the lubricating oil. Also, longer intervals between magnetic element cleanings are achieved with larger magnets, because the areas of attraction and holding are greater. Furthermore, the larger the area of the magnetic field created by the opposing or repelling poles of the adjacent magnets, the longer the oil is exposed to the magnetic field and its degradation retarding properties.

The oil element case **2** is made with non-magnetic material and there is no particular choice of material to be used. The group of example materials include copper metal (yellow copper, bronze phosphate, nickel silver, aluminum bronze), and aluminum and its kind, magnesium and its compound, titanium and its compound, zinc and its compound, lead and its compound, stainless steels. These materials surfaces are treated.

Although FIG. **1** refers to spin-on type automobile oil filters, the same filter can be used on motorcycles, industrial vehicles, hydraulic machinery and air machinery, as long as similar forms of oil filters are used.

### Embodiment No. 2.

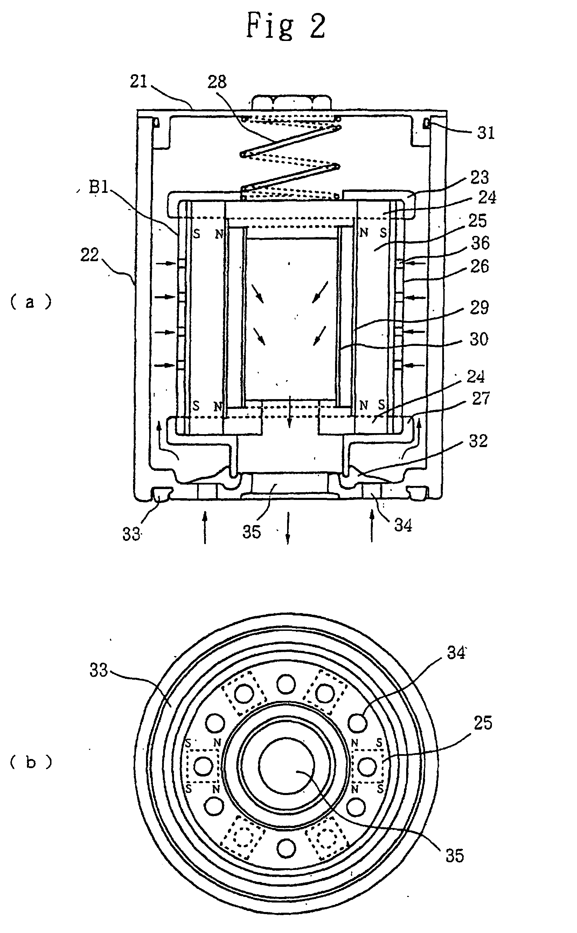

FIG. 2 describes another embodiment of the oil filter not using a filter paper but using permanent magnets as a spin-on oil filter for automobiles. (a) in FIG. **1** is a cross-sectional view and (b) is the base view of the filter.

FIG. **2** describes an oil filter in which the non-magnetic oil element casing and the magnetic filter elements, in place of paper filter elements, made up of disk-shaped magnets are integral. The filter elements are constructed as described in the same diagram and referred to as disk-shaped magnet element **A1**. The center-holed disk shaped permanent magnets **4** which flat polar sides attach to yokes **3**. The element set bolt **7** is placed through the center holes in of the magnets. The opposing poles are positioned so that their poles continually repel each other. Between the adjacent disc-shaped magnets are supportive panels **5** with holes **14** for the oil to flow through. A nut **8** on the top end, and a rubber flow controller **11** on the bottom end of the element set bolt 7 are placed. This disk-shaped magnet element **A1** replaces a paper filter.

FIG. **2** depicts an embodiment that replaces a paper filter with rectangular-cube shaped magnets **25** which opposing, lengthwise poles are arrayed on a circle around a point at constant intervals with the same pole facing the point and the opposite poles facing away from the point. The rectangular-cube shaped magnets are fixed in place with the set plate **24,** top endplate **23,** lower end plate **27** on each end.

The turbulence-creating plates **29** and **30** are located within the circular array formed by the placement of the rectangular-cubic magnets **25**. Surrounding the circular array formed by the rectangular-cubic magnets is a perimeter **26** with holes **36** expediting the flow of oil. The rectangular-cube magnets **25** are fixed in place by a set plate **24.** A rubber anti-flowback valve **32** is positioned on the end plate **27.** We will call this rectangular-cubic magnet element **B1** to replace paper filter elements.

To make removal of the rectangular-cubed magnet element **B1** possible, the casing has a two-part structure. The rectangular-cubed magnet element **B1** placed inside the non-magnetic element case **22** is held in place by set spring **28** above the rectangular-cubed magnet element **B1** and the oil element cap 1 with cap O-ring **31** to close the oil element case **22.** This procedure makes the oil filter with such characteristics as paperless filtration and strong repelling magnetic fields.

As the arrows indicate, oil enters into the oil filter through the oil intake **34**, through holes **36** of outer tube **26,** between rectangular-cube magnets **25,** and the turbulent plates **29, 30,** and exit through the outlet **35** to return to the cycle flow. **33** is the case O-ring.

By flowing the oil through magnetic fields between large, permanent, rectangular-cube magnets, like above, where N poles and N poles, and S poles and S poles are repelling each other, rather than the conventional, paper-based oil filter elements, attraction of the metal particles to the permanent magnets are more reliable. Also, the larger the magnets, the larger the areas of attraction. This results in longer intervals between magnetic filter element cleanings.

### Embodiment No. 3

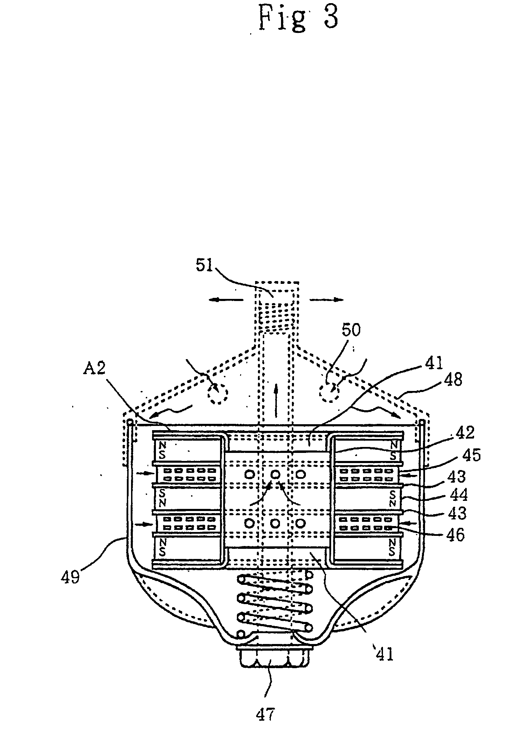

FIG **3** indicates the application of the oil filter not using a filter paper but using permanent magnets as a full-flow element exchangeable oil filter for automobiles. (a) in FIG. **3** is a cross-sectional view and (b) is the base view of the filter.

FIG. **3** describes a sample oil filter in which the non-magnetic oil element casing and the disk-shaped, magnetic filter elements are separable. The filter elements are constructed as described in the same diagram, and referred to as disk-shaped magnet element **A2**. The center holed, disk-shaped permanent magnets **44** have flat, polar sides attached to yokes **43.** The inner tube **42** is placed through the center holes of said magnets. Opposing, like magnetic fields repel each other continually. Between the adjacent, disc-shaped magnets reside supportive structures **45** permeated by holes **46** through which oil flows. The set end plat **41** is placed on each end of the inner tube **42.** The disk-shaped magnetic element replacement for a paper filter is designated **A2.**

The disk-shaped magnetic elements **A2** with non-magnetic oil element casing **49** will be installed onto the case cap **48** on the engine with a center bolt **47.**

As the arrows indicate, oil enters into the oil filter through the oil intake **50,** through holes **46** in the support place **45,** between poles of the disk-shaped magnets **44,** and into the center bolt **47** space, and exits through the outlet **51** and returns to lubricate the host machinery.

By flowing the oil through magnetic fields generated by large permanent magnets, in which N pole and N poles, and S poles and S poles are repelling each other, rather than through conventional, paper-based oil filtering elements, a significantly larger percentage of metal particles are removed from the lubricating oil. Also, longer intervals between magnetic element cleanings are achieved with larger magnets, because the areas of attraction and holding are greater. Furthermore, the larger the area of the magnetic field created by the opposing poles of the adjacent magnets, the longer the oil is exposed to the magnetic field and its degradation retarding properties.

Although FIG. **3** refers to full-flow element exchangeable type automobiles oil filter, the same filter can be used on motorcycles, industrial vehicles, hydraulic machinery and air machinery, as long as similar forms of oil filters are used.

### Embodiment No. 4

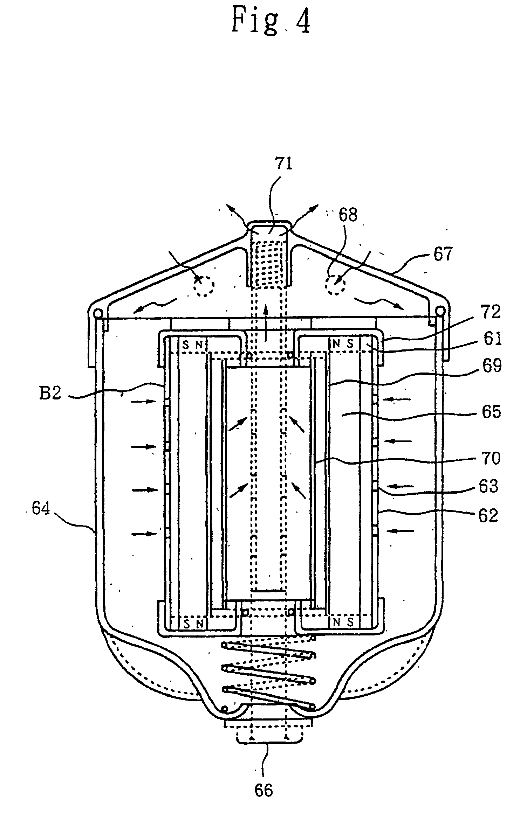

FIG. **4** describes another embodiment of the oil filter not using a filter paper but using permanent magnets as a full-flow element exchangeable oil filter for automobiles. (a) in FIG. **4** is a cross-sectional view and (b) is the base view of the filter.

FIG. **4** describes an oil filter in which the non-magnetic oil element casing and the magnetic filter elements that are separable from each other. The filter elements are, in pace of paper filter elements , made up of rectangular-cube-shaped magnets **65** which opposing, lengthwise poles are arrayed on a circle around a point at constant intervals with the same pole facing the point and the opposite poles facing away from the point. The rectangular-cube shaped magnets **65** are fixed in place with the set plate **61**. The turbulence-creating plates **69** and **70** are located within the circular array formed by the placement of the rectangular-cubic magnets **65.** Along with the turbulence-creating plates **69** and **70,** the support plate **62** with holes **63** expediting the flow of oil are fixed in place by the end plates **72.** The filter elements constructed described here is referred to as stick-shaped magnet element **B2.**

The disk-shaped magnetic elements **B2** with non-magnetic oil element casing **64** will be installed onto the case cap **67** on the engine with a center bolt **66.**

As the arrows indicate, oil enters into the oil filter through the oil intake **68,** through holes **63** in the support plate **62,** between poles of the stick-shaped magnets **65,** and into the center bolt **66** space, and exits through the outlet **71** and returns to lubricate the host machinery.

The procedure makes the oil filter with such characteristics as paperless filtration and strong repelling magnetic fields.

By flowing the oil through magnetic fields between large, permanent, rectangular-cube magnets, like above, where N poles and N poles, and S poles and S poles are repelling each other, rather than the conventional, paper-based oil filter elements, attraction of the metal particles to the permanent magnets are more reliable. Also, the larger the magnets, the larger the areas of attraction. The results in longer intervals between magnetic filter element cleanings.

The above invention refers to full-flow element exchangeable type automobiles oil filter, and among its distinct characteristics are that it replaces the disposable paper filter elements, it can be removed from the casing for a cleaning, and it produces a strong repelling magnetic field.

Although FIG. 4 refers to full-flow element exchangeable type automobiles oil filter, the same filter can be used on motorcycles, industrial vehicles, hydraulic machinery and air machinery, as long as similar forms of oil filters are used.

### Embodiment No. 5

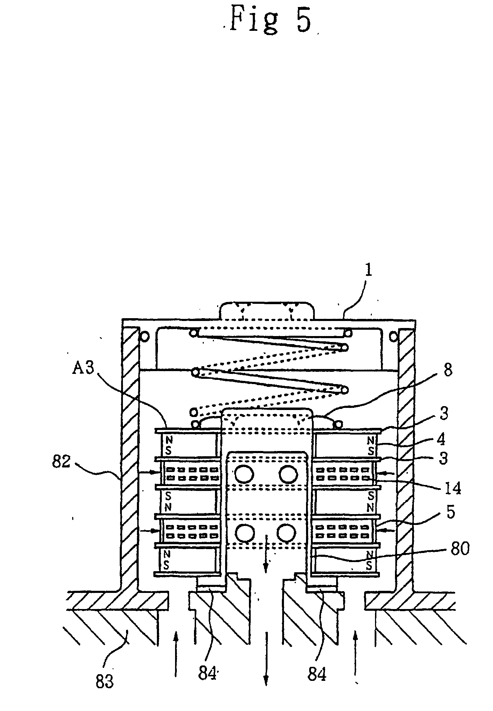

FIG. **5** depicts the application of the oil filter not using a filter paper but using permanent magnets that replaces an inside cartridge type oil filter.

he oil filter of FIG. **5** consists of a non-magnetic oil element case that is firmly attached to the machinery and an exchangeable disc-shaped magnetic elements. The disc-shaped magnetic element is applied to a paper oil filter element. The disc-shaped magnetic element **A3** in FIG. **5** consists of disc-shaped permanent magnets **4,** yokes **3,** an element set bolt **80**, non-magnetic support plates **5** and nuts **8.** The disc-shaped permanent magnets **4** have magnetic fields on their each ends. The yokes **3** are attached to the both sides of magnets **4'**s end. The magnets **4** are placed parallel each other and the adjacent magnets have same magnetic field that is N pole to N pole and S pole to S pole. The central parts of magnets **4** are vacant. The element set bolt **80** is inserted to the vacant central parts of magnets **4.**

Non-magnetic support plates **5** have holes **14** which allow oil to go through. The plates **5** are arranged between the permanent magnets **4.** Nuts **8** are put on the top of the element set bolt **80.** The oil element case **82** is fixed to engine **83**. The disc-shaped magnetic element **A3** is placed inside of the oil element case **82** along with seat packing **84** and an oil element cap **1** is tightened. As the arrows of FIG. **5** indicate, the oil that comes into the inside of the oil tilter passes through the holes **14** of the support plates **5** and then goes through the both ends of the disc-shaped permanent magnets that adjacent to the holes and goes into the central vacant part of set volt 80 and finally goes out to the inside of the engine. The oil flows as designed.

The above mentioned devise is applied to an element exchangeable oil flow filter for automobiles. It emits strong magnetic field lines which repel each other and it could be take out from automobiles for cleaning so that we do not have to use a disposable paper oil filter element.

The oil filter does not require conventional paper oil filters. The magnetic micro particles are surely absorbed to the disc-shaped permanent magnets while they pass between the magnets that repel each other as N pole against N pole and S pole against S pole. The bigger the scale of the magnet becomes the larger the adsorbing area will be. As a result, it is not necessary to clean the filter for a long period. If the magnetic field that emits magnetic field lines between the adjacent permanent magnets becomes larger, the oil passes through the magnetic field slower and it will prevent the oil from deterioration for a long time.

The oil filter in FIG. **5** is applied to the element exchangeable oil flow filters for automobiles, but it could be applied to not only automobiles but also motorcycles, industrial vehicles, oil pressure machinery and air machinery with the same shaped element exchangeable oil filters as the oil filter in FIG. **5.**

### Embodiment No. 6

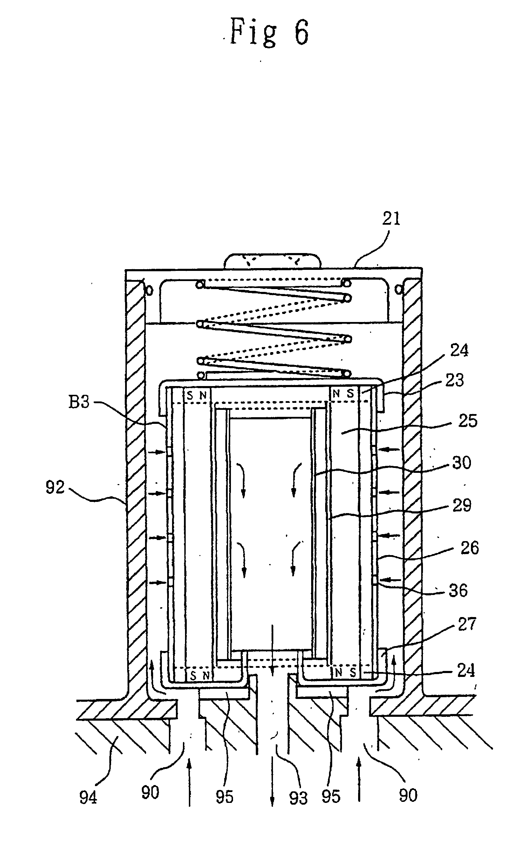

FIG. **6** indicates another application of the oil filter not using a filter paper but using permanent magnets that replaces the inside cartridge type oil filter and which consists of a non-magnetic oil element case that is firmly attached to the machinery and an exchangeable disc-shaped magnetic element. In the diagram **6**, stick-shaped permanent magnets **25** are arranged to form a circle with magnetic fields on their longer ends and a same interval between each magnet. The magnets are placed in the way so that all the same poles are outside of the circle or inside of the circle, that is; all N-poles are outside of the circle while all S-poles are inside of the circle or vice versa. The magnets **25** are fixed by attaching the set plates **24** to the both ends of the magnets. The first turbulent plate **29** and the second turbulent plate **30** are placed inside of the permanent magnets and the plates **29** and **30** have holes to make oil flow turbulent. The magnets **25** and the plates **29** and **30** are fixed by an outside tube **26,** a top end plate **23** and a bottom end plate **27**. This type of the oil filter without using a filter paper is called a stick-shaped magnet type element **B3**.

The stick-shaped magnet type element **B3** is placed inside of the oil element case **92** along with seat packing **95.** The oil element case **92** is attached to an engine. And then an oil element cap **21** is tightened.

As the arrows of the diagram indicate, oil come into the inside of the oil filter through admission valves **90** and passes through the holes **36** of the outside tube **26** and goes through between the adjacent stick-shaped permanent magnets **25**. Then it goes through the turbulent plates **29** and **30** and goes out to the inside of the engine **94.** Oil flows as designed.

The oil filter does not require conventional paper oil filters. The magnetic micro particles are surely absorbed to the stick-shaped permanent magnets while they pass through between the magnets which repel each other as N pole against N pole and S pole against S pole. The bigger the scale of the magnet becomes the larger the adsorbing area will be. As a result, it is not necessary to clean the filter for a long period. If the magnetic field that emits magnetic field lines between the adjacent permanent magnets becomes larger, the oil passes through the magnetic field slower and it will prevent the oil from deterioration for a long time.

The oil filter in FIG. **6** is applied to the element exchangeable oil flow filters for automobiles, but it could be applied to not only automobiles but also motorcycles, industrial vehicles, oil pressure machinery and air machinery with the same shaped element exchangeable oil filters as the oil filter in FIG. **6**.

This invention is, along with the above mentioned two particulars, to replace paper elements in the oil filter with repelling large magnets (N to N, S to S) utilizing the space that would be occupied by paper filter. This is to ensure removal of magnetic micro particles in the oil with large areas of attraction and to extend the time between cleaning of the parts. And, by placing the magnets and the repelling magnetic fields closer together, it has wider effective area, hence, extending the time in which the oil goes through the magnetic field.

The oil filter in the diagram 6 is applied to the element exchangeable oil flow filters for automobiles but it could be applied to not only automobiles but also motorcycles, industrial vehicles, oil pressure machinery and air machinery with the same shaped element exchangeable oil filters as the oil filter in the diagram 6.

We conducted the test runs of automobiles with paper oil filters made by automobile makers and automobiles with oil filters not using filter papers on express highways to confirm the effect of the oil filters without filter papers. The result of the test runs is as follows.

### (Automobile I) Application 1 (Re: Diagram 1) is used for the test run

* Automobile Type Domestic(Made in Japan) Blue Bird SSS
* The First Registration October 1991
* Engine 1800cc
* Test Run Highway Tohoku Express Highway
* Odometer 25,942 km
* Oil Type API Standard-SH
* Tire Pressure 2.0kg/cm2

### (Automobile II) Application 2 (Re: Diagram 2) is used for the test run

* Automobile Type Domestic(Made in Japan) Toyota Crown Diesel
* The First Registration October 1991
* Engine 2 L 2,446cc
* Test Run Highway Tohoku Express Highway
* Odometer 83,246 km
* Oil Type API Standard-CD
* Tire Pressure 2.2kg/cm2

We used the same vehicles for test runs and specified the speed at IC (inter-changes) to compare the differences between the filters with papers and the filters without filter papers. The average speed of the automobile was specified at 90-100km which is not affected by traffic. We measured the time at each IC to confirm the speed of the vehicle. We also measured the velocity of the wind, temperature and moisture at SA(service areas).

| THE FIRST DAY | | |
|---|---|---|
| Estimated mileage of test run on declined express highways | 600km | measure the fuel economy |

| The Second Day | | |
|---|---|---|
| Estimated mileage of test run on regular city street streets | 450km | breaking-in |

| The Third Day | | |
|---|---|---|
| Estimated mileage of test run on uphill express highways | 600km | measure the fuel economy |

The result of the test run mileage and fuel economy of Automobile I is on Chart 1.
The analysis of the oil of Automobile 1 after it ran 1900km is on Chart 2 and 3.
The result of the test run mileage and fuel economy is on Chart 4.

**Table 1**

| | Test 1 | Test 2 | |
|---|---|---|---|
| | Oil filter with paper elements | The new paperless oil filter | Improvement (%) |
| Highway distance on day 1 Fuel economy | 602 kilometers 15.05 kilometer/litter | 602 kilometers 15.76 kilometer/litter | 4.7 |
| City street distance on day 2 Fuel economy | 442.7 kilometers 12.57 kilometer/litter | 446.5 kilometers 12.43 kilometer/litter | - |
| Highway distance on day 3 Fuel economy | 599.8 kilometers 16.96 kilometer/litter | 601.8 kilometers 18.18 kilometer/litter | 7.1 |

**Table 2:**

| Oil Analysis Result | | | |
|---|---|---|---|
| | I Fresh oil | II Driven 1,900 km with oil filter with paper elements | III Driven 1,900 km with the new paperless oil filter |
| Water (%) | <0.05 | <0.05 | <0.05 |
| Solids (%) | <0.1 | 0.1 | 0.1 |
| Fuel (%) | <0.1 | 2.2 | 1.4 |
| Viscosity (cs, at 40C) | 49.87 | 51.14 | 48.10 |
| Viscosity (cs, at 100C) | 9.69 | 9.32 | 9.18 |
| Viscosity index | 184 | 167 | 176 |
| Total base number | 5.51 | 2.64 | 3.94 |

**Table 3**

| (wt ppm) | | | |
|---|---|---|---|
| Metallic elements | I Fresh oil | II Driven 1,900 km with oil filter with paper elements | III Driven 1,900 km with the new paperless oil filter |
| Fe | 1 | 8 | 4 |
| Pb | 1 | 5 | 2 |
| Cu | 1 | 7 | 3 |
| Cr | 0 | 1 | 0 |
| Al | 3 | 3 | 3 |
| Ni | 0 | 0 | 1 |
| Ag | 0 | 0 | 0 |
| Sn | 0 | 0 | 0 |
| Si | 6 | 19 | 15 |
| B | 205 | 134 | 174 |
| Na | 9 | 102 | 32 |
| P | 880 | 899 | 894 |
| Zn | 911 | 991 | 961 |
| Ca | 2227 | 1979 | 2224 |
| Ba | 0 | 3 | 1 |
| Mg | 10 | 128 | 36 |
| Mo | 271 | 186 | 246 |

The comparison between the analysis of the oil from the oil filter using conventional filter paper and the oil filter not using filter paper but permanent magnets is as follows.
1. There is no difference on water between them.
2. Little solid (e.g. tar) was generated in both oil.
3. Adulteration of fuel into the oil is less in the oil from the oil filter with permanent magnets than the filter with filter papers.
4. The change of viscosity is less in the oil filter with permanent magnet than the other.
5. Decrease of hydroxyl equivalent is less in the oil filter with permanent magnets than the other.
   The diagram 7 indicates how hydroxyl equivalent of the oil from Automobile 1 decreases. The axis of ordinates is hydroxyl equivalent(mg KOH/g) and the axis of abscissas is mileage(km). The hydroxyl equivalent decreases to zero at the mileage of 3670 km after the continuous drive with high speed for three days due to rapid degradation of oil caused by high temperature. In practice, the hydroxyl equivalent is supposed to decrease to zero at the mileage of 3000 km due to rapid degradation of the oil caused by not only high temperature but also heat as the result of friction generated by adulteration of oil.
   The oil filter not using filter papers but permanent magnets enhances the wrapping process within an engine and it helps to decrease heat produced by friction. The filter also decreases adulteration of blow-by gas into oil and it prevents oil from degradation. As a result, the hydroxyl equivalent of oil decreases in a straight line. The span of oil life for the oil used with the invented oil filter is supposed to become twice longer than that for the oil used with the conventional oil filter.
6. The effect of the invented oil filter is apparent considering the improvement in fuel economy and the comparison in degradation of oil between the oil used with the invented oil filter and the conventional oil filter.
7. The invented oil filter adsorbs micro magnetic particles produced by friction . It prevents oil from continuous abrasion afterward. It means that oil filter has effects on prevention of oil from degradation due to abrasion by utilizing magnetic fields and oil could be used for a long time.

**Table 4:**

| | Test 1 Oil filter with paper elements | Test 2 The new paperless oil filter | Test 3 The new paperless oil filter | Improvement (%) |
|---|---|---|---|---|
| Odometer reading at oil change | 83,246 kilometer | 85,431 kilometer | 88,949 kilometer | - |
| Day 1 Highway distance Fuel economy | 610 kilometers 13.55 kilometer/litter | 610 kilometers 13.60 kilometer/litter | 610 kilometers 14.02 kilometer/litter | 3.46 |
| Day 2 City street distance Fuel economy | 563 kilometers 10.48 kilometer/litter | 548 kilometers 10.66 kilometer/litter | 580 kilometers 11.30 kilometer/litter | 7.82 |
| Day 3 Highway distance Fuel economy | 610 kilometers 13.72 kilometer/litter | 610 kilometers 14.42 kilometer/litter | 610 kilometers 16.05 kilometer/litter | 16.98 |

Gasoline was used for the test runs of Automobile I, but diesel was used for the test runs of Automobile **11**. Even the test runs of the express highways used by diesel that is degraded worse than gasoline, the improvement of fuel economy was reported when the invented oil filter was used. It is considered as effects of the invented oil filter.

### POSSIBILITY OF INDUSTRIAL USAGE

As stated above, oil goes through between magnetic fields that repel each other (N-poles against N-pole or S-pole against S-pole) continuously in the invented oil filter without a conventional filter paper . As a result, the filter strongly prevents oil from degradation by increase of stabilized molecules along with adsorption of micro magnetic particles.

The invented oil filters keep good conditions of internal combustion engines, transmissions, reduction gears, and oil presser machinery in automobiles, ships, trains, other industrial vehicles and machinery . It lengthens life span of machinery , saves fuel cost and reduces environmental polluted gas. It make possible to use oil filter continuously for a long time and stop deforestation for producing filter papers.

## Claims

1. Oil filter not using a filter paper but using permanent magnets, the oil filter consists of disc-shaped permanent magnets that have magnetic fields on their end and have yokes attached to the both sides of the magnets end, the adjacent permanent magnets are placed N pole to N pole and S pole to S pole on the same line, supporting plates are arranged between the permanent magnets, the supporting plates are non-magnetic and have holes that allow oil to go through, the permanent magnets and the other parts are stabilized and this oil filter is placed in a non-magnetic oil element case, **characterized in that** the distance between adjacent magnets is less than one half of the distance the same magnets keep apart from each other when placed vertically stacked with repelling sides facing against each other whereby the lower magnet must be placed on a non-magnetic material.

2. Oil filter according to claim 1, **characterised in that** oil filter with the disc-shaped magnetic elements is able to be disassembled.

3. Oil filter according claim 1; **characterised in that** the non-magnetic oil element case is attached to a machinery.

4. The use of the oil filter according claims 1-4 as filter for internal combustion engines, transmissions or reduction gears, or oil pressure machinery.

5. Oil filter not using a filter paper but using permanent magnets, the oil filter consists of stick-shaped permanent magnets that are arranged to form a circle with magnetic fields on their longer ends and a same interval,between, each magnet, the magnets are placed in the way so that all the same poles are outside of the circle or inside of the circle, that is all N-poles are outside of the circle while all S-poles are inside of the circle or vice versa, turbulent plates with holes are arranged inside of the permanent magnets and the longer ends of the magnets and supporting plates are fixed by stabilizing bases, the oil filter element with the stick-shaped magnets is stabilized inside a non-magnetic oil filter case, **characterized in that** the distance between adjacent magnets is less than one half of the distance the same magnets keep apart from each other when placed vertically stacked with repelling sides facing against each other whereby the lower magnet must be placed on a non-magnetic material.

6. Oil filter according to claim 6, **characterised in that** the oil filter with the stick-shaped magnetic elements is able to be disassembled.

7. Oil filter according to claim 6, **characterised in that** the non-magnetic oil element case is attached a machinery.

8. The use of the oil filter according to claims 6-9, as a filter for internal combustion engines, transmissions or reduction gears, or oil pressure machinery.

## Patentansprüche

1. Ölfilter mit einem Dauermagneten an Stelle eines Filterpapiers, bestehend aus scheibenförmigen Dauermagneten mit magnetischen Feldern an ihren Enden, wobei auf beiden Seiten der magnetischen Enden Joche angeordnet sind, benachbarte Dauermagnete mit N-Pol zu N-Pol und S-Pol zu S-Pol in der gleichen Linie angeordnet sind, zwischen den Dauermagneten Stützplatten angeordnet sind, die nicht magnetisch sind und Durchtrittsöffnungen für den Öldurchfluss haben, und wobei die Dauermagnete und die anderen Teile befestigt in einem nichtmagnetischen Ölfiltergehäuse angeordnet sind, **dadurch gekennzeichnet, dass** der Abstand benachbarter Dauermagnete kleiner als der halbe Abstand der zwischen den Dauermagneten ist, wenn diese in vertikaler Richtung mit ihren abstoßenden Magnetseiten einander zugeordnet übereinander angeordnet sind, wobei der untere Dauermagnet auf einem nichtmagnetischen Werkstoff liegt.

2. Ölfilter nach Anspruch 1, **dadurch gekennzeichnet, dass** der Ölfilter mit dem scheibenförmigen Dauermagnet auseinandernehmbar ist.

3. Ölfilter nach Anspruch 1, **dadurch gekennzeichnet, dass** das nichtmagnetische Ölfiltergehäuse an einer Maschine angeordnet ist.

4. Verwendung eines Ölfilters nach den Ansprüchen 1 bis 3 als Filter für einen Motor mit innerer Verbrennung, für ein Übertragungs- oder Reduktionsgetriebe oder für eine Öldruckmaschine.

5. Ölfilter mit einem Dauermagneten an Stelle eines Filterpapiers, bestehend aus stabförmigen Dauermagneten, die kreisförmig in gleichem Abstand zueinander angeordnet sind und magnetische Felder an ihren langen Enden haben, wobei die Dauermagnete mit ihren gleichen Polen entweder innerhalb des Kreises oder außerhalb des Kreises liegen, d.h. alle N-Pole sind außerhalb des Kreises und alle S-Pole sind innerhalb des Kreises oder umgekehrt, aus an der Innenseite der Dauermagnete angeordneten Verwirbelungsplatten mit Durchtrittsöffnungen, wobei die langen Enden der Dauermagnete mit Stützplatten auf einer Grundplatte befestigt und das Ölfilterelement mit den stabförmigen Dauermagneten im Innern eines nichtmagnetischen Ölfiltergehäuses befestigt ist, **dadurch gekennzeichnet, dass** der Abstand benachbarter Dauermagnete kleiner als der halbe Abstand zwischen den Dauermagneten ist, wenn diese in vertikaler Richtung mit ihren abstoßenden Magnetseiten einander zugeordnet übereinander angeordnet sind, wobei der untere Dauermagnet auf einem nichtmagnetischen Werkstoff liegt.

6. Ölfilter nach Anspruch 5, **dadurch gekennzeichnet, dass** der Ölfilter mit den stabförmigen Dauermagneten auseinandernehmbar ist.

7. Ölfilter nach Anspruch 5, **dadurch gekennzeichnet, dass** das nichtmagnetische Ölfiltergehäuse an einer Maschine angeordnet ist.

8. Verwendung eines Ölfilters nach den Ansprüchen 5 bis 7 als Filter für einen Motor mit innerer Verbrennung, für ein Übertragungs- oder Reduktionsgetriebe oder für eine Öldruckmaschine.

## Revendications

1. Filtre à huilé utilisant des aimants permanents au lieu de papier filtre, qui est constitué d'aimants permanents discoïdaux générant un champ magnétique à leurs extrémités et comportant des étriers fixés de chaque côté, dans lequel les aimants permanents adjacents sont disposés de telle façon que le pôle N est dirigé vers le pôle N et le pôle S est dirigé vers le pôle S sur la même ligne, dans lequel des plaques de support amagnétiques sont agencées entre les aimants permanents et comportent des trous qui permettent le passage de l'huile et dans lequel les aimants permanents et les autres pièces sont stabilisées, ledit filtre à huile étant placé dans un carter à huile amagnétique, **caractérisé en ce que** la distance entre aimants adjacents est inférieure à la moitié de la distance qui séparent ces aimants lorsqu'ils sont empilés verticalement en ayant leurs côtés qui se repoussent opposés l'un à l'autre de façon à placer l'aimant inférieur sur un matériau amagnétique.

2. Filtre à huile selon la revendication 1, **caractérisé en ce que** le filtre à huile dotés des éléments magnétiques discoïdaux peut être démonté.

3. Filtre à huile selon la revendication 1, **caractérisé en ce que** le carter d'huile amagnétique est fixé à un dispositif mécanique.

4. Utilisation du filtre à huile selon les revendications 1 à 3, comme filtre pour moteur à combustion interne, engrenages de transmission ou réducteurs, ou dispositif de mise sous pression de l'huile.

5. Filtre à huile utilisant des aimants permanents au lieu de papier filtre, qui est constitué d'aimants permanents en forme de bâtonnets qui sont disposés à équidistance en formant un cercle et qui génèrent un champ magnétique à leurs extrémités, dans lequel les aimants sont agencés de telle manière que tous pôles de même nom sont à l'extérieur ou l'intérieur du cercle, c'est-à-dire que tous les pôles N sont à l'extérieur du cercle tandis que tous pôles S sont à l'intérieur du cercle et réciproquement, dans lequel des plaques de turbulence dotées de trous sont disposées à l'intérieur des aimants permanents et les extrémités plus longues des aimants et des plaques de support sont fixées par des bases stabilisatrices, le filtre à huile dotés des aimants en forme de bâtonnets étant stabilisé à l'intérieur d'un carter de filtre à huile amagnétique, **caractérisé en ce que** la distance entre aimants adjacents est inférieure à la moitié de la distance qui séparent ces aimants lorsqu'ils sont empilés verticalement en ayant leurs côtés qui se repoussent opposés l'un à l'autre de façon à placer l'aimant inférieur sur un matériau amagnétique.

6. Filtre à huile selon la revendication 5, **caractérisé en ce que** le filtre à huile doté des éléments magnétiques en forme de bâtonnets peut être démonté.

7. Filtre à huile selon la revendication 5, **caractérisé en ce que** le carter d'huile amagnétique est fixé à un dispositif mécanique.

8. Utilisation du filtre à huile selon les revendications 5 à 7 comme filtre pour moteur à combustion interne, engrenages de transmission ou réducteurs, ou dispositif de mise sous pression de l'huile.
